Europäisches Patentamt

European Patent Office

Office européen des brevets

(11) Publication number: **0 281 423**
**A1**

## (12) EUROPEAN PATENT APPLICATION

(21) Application number: **88301940.8**

(22) Date of filing: **04.03.88**

(51) Int. Cl.⁴: **G 11 B 23/113**

(30) Priority: **06.03.87 GB 8705243**

(43) Date of publication of application:
**07.09.88 Bulletin 88/36**

(84) Designated Contracting States:
**AT BE CH DE ES FR GB GR IT LI LU NL SE**

(71) Applicant: **STRAND VIDEO ENTERTAINMENT LTD**
**Strand House Condor Close Woolsbridge Industrial Park**
**Three Legged Cross**
**Wimborne Dorset BH21 6SZ (GB)**

(72) Inventor: **Campbell, Richard John**
**17 Burley Close Verwood**
**Wimborne Dorset (GB)**

(74) Representative: **Hands, Horace Geoffrey et al**
**GEORGE FUERY & CO Whitehall Chambers 23 Colmore Row**
**Birmingham B3 2BL (GB)**

(54) Tape winding machine.

(57) A tape winding machine (Figure 2) has a double vacuum trough (114) with a tape counting wheel (135) between the two troughs. By these means, the wheel can be wrapped about 180 deg. arc to give good contact, ample buffer length can be provided to reduce tape breakage, and the tape only contacts rollers on its non-oxide side.

Fig. 2

**Description**

TAPE WINDING MACHINE

The present invention relates to a machine for winding tape, particularly though not exclusively for winding magnetic tape such as used for video and audio recording.

Conventional audio tape for low density analogue recordings is less sensitive to damage during winding than high density digital recording tape as used for video recordings and now also audio recordings. Video tape winding machines have been developed with little change from audio tape winding machines. They suffer from shortcomings particularly in using one or more guide rollers running on the magnetic medium/oxide side of the tape. Since tape winding machines operate at speeds enormously in excess of normal tape operating speeds, the rubbing contact with the oxide side of the tape is liable to damage the tape during winding.

Accordingly it is an object of the invention to provide a tape winding machine in which contact with the oxide side of the tape is reduced or eliminated.

A further problem in tape winding machines is to know accurately the quantity of tape which has been wound. Conventionally this is measured by passing the tape partially around a tape-counting wheel. To reduce slippage the angular length of contact with the wheel must be a maximum. This effectively reverses the direction of movement of the tape and often in the past it has needed further rollers and hence more contact with the tape solely to correct the movement direction after the counting wheel.

Accordingly it is a further object of the invention to maximise the angular length of contact with a tape-counting wheel in a tape winding machine, without needing further rollers.

It is known to provide a vacuum trough in a tape winding machine which has the functions of providing a buffer length of tape permitting fast acceleration of the tape and of turning the direction of tape feed back on itself without contact with the oxide side of the tape.

The invention provides a tape winding machine including a combined double vacuum trough and a tape-counting wheel, with the tape-counting wheel arranged with one of the troughs upstream of it and the other downstream of it.

By vacuum trough is meant an aperture of rectangular cross-section at a mouth of which tape guide means (which can be a tape-counting wheel) is provided and at an inner part of which a vacuum connection is provided whereby in use the tape is drawn into the aperture and forms a loop or bight maintained in the aperture by gas - in practice air - pressure thereacross.

The invention also provides a tape winding machine including a tape-counting wheel wherein there is no contact with the oxide side of the tape except (if required) by a cleaning tape at a cleaning station.

The cleaning station is arranged between a tape spool and a double vacuum trough including the tape-counting wheel with tape being led directly from the vacuum trough to a splicing/winding station.

In the preferred embodiment, both the oxide side and the reverse side of the tape are cleaned by cleaning tape.

To help understanding of the invention, a specific embodiment thereof will now be described by way of example and with reference to the accompanying drawings in which:-

Figure 1 is a diagrammatic plan view of the tape run in a conventional tape winding machine;

Figure 2 is a similar view of the tape run in a tape winding machine of the invention;

Figure 3 is a plan view of the double vacuum trough of the machine of Figure 2; and

Figure 4 is a cross-sectional view on the line IV-IV in Figure 3.

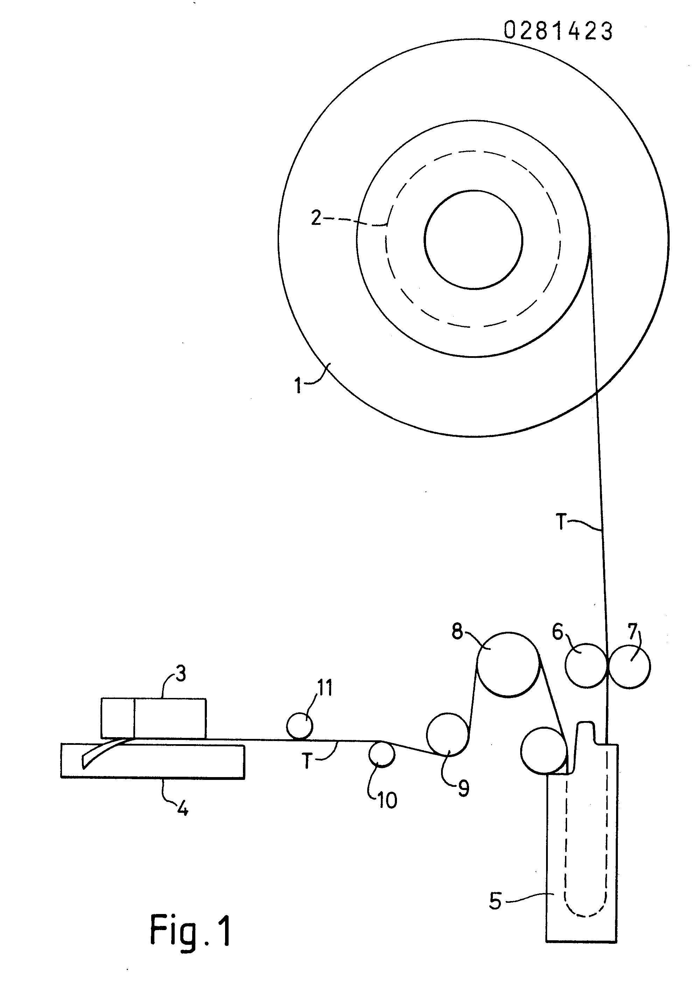

Referring first to Figure 1, there is shown diagrammatically a conventional tape winding machine having a spool 1 of supply tape on a drive unit 2 and a splicing block 3 associated with a cassette platform and drive unit 4. In use, the tape T to be wound is spliced to a leader tape of the spool in the cassette to be wound. Tape is wound onto this, and then cut and spliced onto a leader tape of the other cassette spool.

On the tape run between the tape spool 1 and the splicing block 3 is a vacuum trough 5 having tape guide rollers 6,7 on its upstream side. It will be noted that as the spool 1 becomes depleted, the oxide side guide roller 6 runs with increasing tape contact. Immediately downstream of the vacuum trough is a tape-counting wheel 8 which is contacted by the reverse side of the tape around some 155 deg. Next downstream is another oxide side roller 9 turning the tape through 100 deg. Guides 10,11 are then provided with cleaning tape to clean the tape being wound. From here the tape passes to the splicing block.

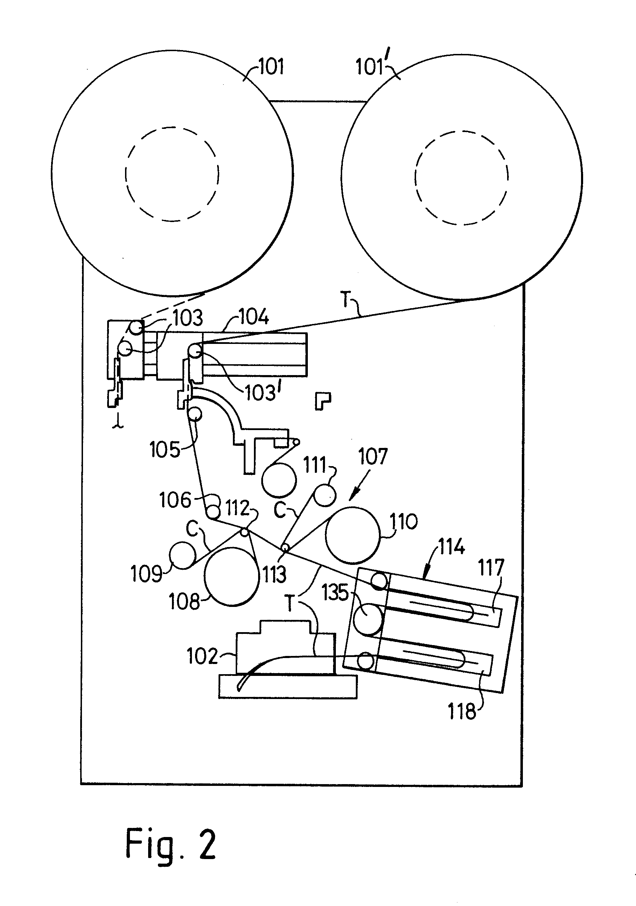

Turning now to Figure 2, the tape winding machine in accordance with the invention has two spools 101,101' of supply tape to be wound with a splicing unit 102 for splicing the end of one tape to the beginning of another. This is of conventional design and will not be described in detail. It should be noted that the invention is applicable to single spool machines, although an advantage of a two spool machine is a reduction in "downtime" during tape change. From the operational spool 101, 101', the tape T passes, via respective reverse side guide rollers 103,103' provided on a slide 104, to two further reverse side guide rollers 105, 106 and then to a cleaning tape station 107. Here cleaning tape C being wound slowly from reel 108 to reel 109 and from reel 110 to reel 111 cleans the oxide and reverse sides respectively of the tape T being wound. The cleaning tape passes around an oxide side guide roller 112 and a reverse side guide roller 113. The roller 112 is the only oxide side guide roller in the machine and the cleaning tape C is interposed between itself and the tape T being wound. Hence the tape path comprises a series of straight line portions between successive rollers each of which turns the path along the next line.

From the tape cleansing station 107, the tape T passes to a double vacuum trough 114, described in detail below, and on to a splicing block 102 with a cassette platform and drive unit of conventional design.

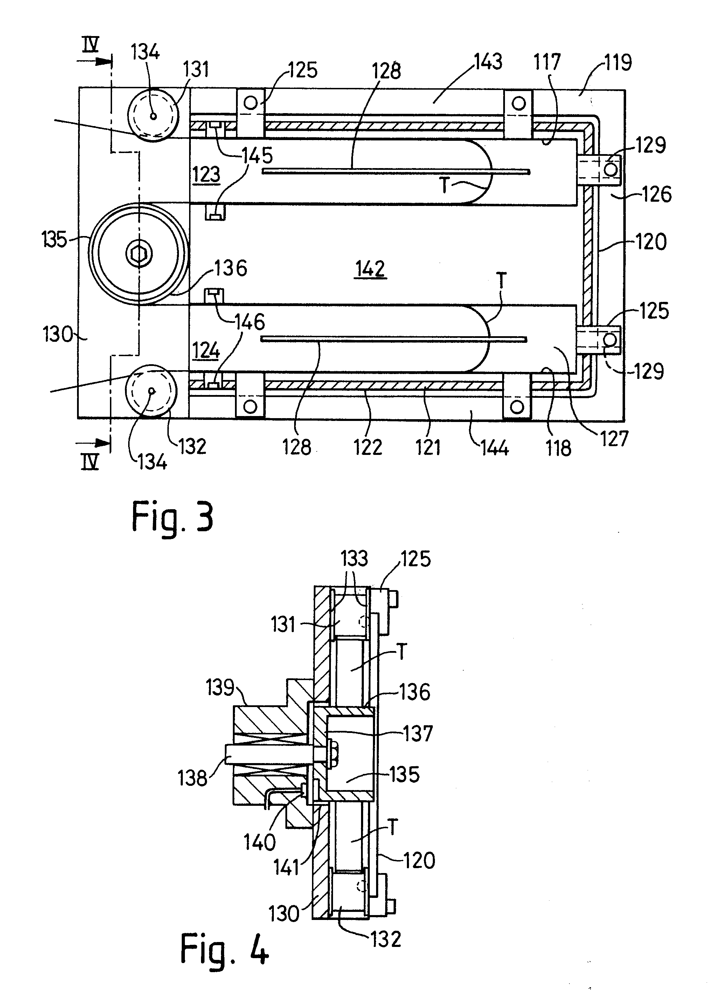

The double vacuum trough 114, shown in more detail in Figures 3 and 4, has two troughs or channels 117, 118 cut in a block of for example aluminium 119. A glass plate 120 closes the channels on their top side, with an elastomeric sealing strip 121 in a groove 122 in the aluminium block sealing the glass plate to the block around the edges of the glass except at mouths 123, 124, of the channels 117, 118. Brackets 125 secure the glass plate to the aluminium block 119. Opposite the mouths 123, 124 the channels are closed by end walls 126 of the aluminium block. Bottom walls 127 of the block have vacuum slits 128 extending centrally along them from 20% to 90% of the length of the channels. A further vacuum bore 129 is provided in the end wall of each channel.

At the mouths 123, 124 of the channels, the aluminium block is cut away to provide a ledge 130 on which upstream and downstream tape guide rollers 131, 132 are provided. These rollers have flanges 133 and are journalled on pins 134 secured in the ledge 130. Centrally of the ledge a tape-counting wheel 135 is provided. It is hollow and has a plain, circularly cylindrical tape contact surface 136. Across the lower end of the wheel, it has a flange 137 in which is secured a shaft 138 journalled in bearings provided in a bearing block 139 secured to the underside of the ledge. The bearing block carries an optical detector 140 for counting revolutions of the counting wheel by means of a slot in the flange 137. The tape-counting wheel is therefore a self-contained unit with the detector 140. A bore 141 is provided in the ledge 130 whereby the wheel is partially accommodated therein.

The diameter of the wheel 135 is just greater than the thickness of a central wall 142 between the channels 117, 118, whereby tape running along the central wall 142 and leaving the channel 117 passes straight onto the wheel 135, extends 180 deg. around and straight back into the channel 118 to run along the other side of the central wall. The peripheries of the guide rollers 131, 132 are aligned with the inside surfaces of the outer walls 143, 144 of the aluminium block. The flanges 133 of the guide rollers 131, 132 control the height of tape in the channel so that the tape runs in the channel with a small clearance between both the bottom walls 127 and the glass plate 120. At both the guide rollers 131, 132 the tape is turned through 10 deg.

In operation, the tape is drawn into a U-shaped bight in each of the channels 117,118 by vacuum drawn through the slits 128 and the bore 129, to a typical extent shown in Figures 2 and 3. The vacuum pulls the tape tightly onto the tape-counting wheel 135 so that little slippage with the wheel is experienced. This is of plastics material, thus is light and can accelerate/decelerate fast. Because of there being a vacuum trough on both sides of the wheel abrupt movements of the tape will tend to cause variation in the length of one or both bights, i.e. the extent of the tape into the troughs, without slippage on the wheel being caused. By making the two troughs parallel the wheel is wrapped about 180 deg. of arc.

Should the tape break or leave either trough, this will be detected by light passing between respective optical sensors 145, 146 provided on opposite sides of the channels adjacent their mouths.

## Claims

1. A tape winding machine including a combined double vacuum trough and a tape counting wheel, with the tape-counting wheel arranged with one of the troughs upstream of it and the other downstream of it.

2. A tape winding machine comprising means (101) for supporting a reel of supply tape, means for feeding the supply tape along a path to a splicing station (102), and means (135) for measuring the length of tape fed along the path, in which said path extends in a series of straight line portions between rollers (103, 105,106) whichs turns the tape from one portion to the next, and in which all of the said rollers contact the tape on one and the same side of the tape, and in which the tape path is substantially reversed without using a roller on the other side of said tape by a pair of vacuum troughs (117,118) for receiving U-shaped bights of the tape, and a tape counting wheel (135) to be wrapped by the tape located between the troughs.

3. A tape winding machine as claimed in claim 2 in which means (101,101') are provided for supporting two reels of supply tape for alternate use, and said path for the tape extends over a first roller (103) which is mounted on a slide (104) and provided with means for moving it according to which supply tape reel is to be used.

0281423

**Fig. 1**

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 341 362  (D.O. NEATHERY) * Abstract; column 2, line 60 - column 3, line 63; column 6, lines 34-59; figures * | 1,2 | G 11 B  23/113 |
| X | US-A-4 372 503  (D.W. KINCHELOE) * Abstract; column 2, line 54 - column 4, line 27; figures * | 1,2 | |
| A | US-A-4 497 454  (G.M. WOODLEY) * Abstract; column 2, line 61 - column 3, line 11; column 5, line 65 - column 6, line 18; figure 1 * | 1-3 | |
| A | US-A-4 113 196  (G.D. REHKLAU) * Column 2, lines 50-65; column 6, line 51 - column 7, line 19; figure 1 * | 1,2 | |
| P,A | EP-A-0 221 397  (ROBOTECNICA) * Pages 2-4; figure * | 1-3 | |
| A | FR-A-2 353 112  (SONY) * Page 6, lines 5-27; page 7, lines 31-41; page 8, lines 24-34; page 36, line 16 - page 39, line 34; figures * | 1-3 | TECHNICAL FIELDS SEARCHED (Int. Cl.4)<br><br>G 11 B |
| A | FR-A-2 306 502  (TOKYO DENKI) * Page 3, lines 6-26; figure 1 * | 1,2 | |
| A | EP-A-0 152 641  (PHILIPS) ----- | | |

The present search report has been drawn up for all claims

| Place of search | Date of completion of the search | Examiner |
|---|---|---|
| THE HAGUE | 07-06-1988 | DECLAT M.G. |